# EUROPEAN PATENT SPECIFICATION

(11) **EP 2 757 877 B1**
(45) Date of publication and mention of the grant of the patent: **18.05.2016**
(21) Application number: 12791547.8
(22) Date of filing: 21.09.2012
(51) Int. Cl.: A01K 73/04

(54) **SYSTEM AND METHOD FOR CONTROLLING AND DISPLAYING PARAMETERS DURING TRAWLING**
SYSTEM UND VERFAHREN ZUR STEUERUNG UND WIEDERGABE VON PARAMETERN WÄHREND DER SCHLEPPNETZFISCHEREI
SYSTÈME ET PROCÉDÉ DE CONTRÔLE ET D'AFFICHAGE DE PARAMÈTRES PENDANT LE CHALUTAGE

(30) Priority: 22.09.2011 NO 20111285
(43) Date of publication of application: 30.07.2014
(73) Proprietor: Scantrawl a.s., 3167 Åsgårdstrand (NO)
(72) Inventor: SKJOLD-LARSEN, Henning, N-3167 Åsgårdstrand (NO)
(74) Representative: Onsagers AS
(86) International application number: PCT/IB2012/055024
(87) International publication number: WO 2013/042076

(56) References cited:
- WO-A1-2005/077162
- WO-A1-2006/011807
- GB-A- 1 318 537
- NO-A- 20 063 139
- US-A1- 2007 091 719

## Description

The invention relates to a system and method for control of trawling.

Many different measuring systems and devices exist today for monitoring a trawling process. They may involve systems for measuring the size of the opening of the trawl, the speed of the trawl relative to the water, the amount of fish caught by the trawl, etc. This information may be transmitted to the operator of the trawl and the trawl winch on the boat, thereby enabling them to carry out actions in order to optimise the trawling process.

During trawling the operator/boatman has a limited number of actions which can be carried out to influence the trawl's geometry in order to optimise the trawl process and thereby the result of the fishing. He may, for example:
- change the speed
- change the length of the trawl wires
- change the angle of the trawl doors
- turn

The challenge will therefore be to make the right decision at any time as to which action should be undertaken on the basis of the available data.

At present the trawl monitoring systems currently in use indicate a number of parameters, each of which tells the operator the status of a part of the trawl. These parameters are displayed in succession or simultaneously on a screen according to the wishes of the operator.

A modern fishing system with sensors such as a trawl eye, flow sensors in the trawl opening and bellows, door angle sensors and filling indicators in addition to the traditional sensors which formed the basis for the development of a complete fishing system offers so much information of importance to the fishermen that there is a need to use a system consisting of several screens.

This naturally applies to an even greater degree to those fishing with two or three trawls.

The usual procedure is to employ two or three screens on the bridge console and one at the winch console, but screens may also be placed in the mess or other locations where the trawl boss and others can observe what is going on.

The object of the invention is to provide a method and a system for control of trawling which enables the trawling operator to make easy, fast and correct decisions during the fishing operation.

WO 2006/011807, WO 2005/077162, GB 1318537 and NO 20063139 describes various systems for mapping the position of fishing gear, and describes use of a number of sensor modules and combination of measurements to be able to provide a representation of the fishing gear and display the position of the fishing gear.

The object of the invention is achieved by means of the features in the patent claims.

In an embodiment of the invention a system for trawling comprises two or more sensors for measuring the trawl parameters during fishing, a screen for displaying sensor data and a processor unit for processing sensor data.

The sensors may be one or more quantity sensors, angle sensors, trawl eyes, trawl speed sensors, door distance sensors or a combination thereof. Other sensors employed in connection with trawling may also be utilised in the system.

The measurement of the trawl parameters may be conducted at predetermined intervals or continuously.

In an aspect of the invention the processor unit is adapted for calculating the deviation between desired value for the trawl parameters and the value measured by the sensor for the trawl parameters. The desired value for the trawl parameters may be pre-programmed, it may be determined by an operator during the fishing operation or may be determined in other ways. In an embodiment the desired value is determined by the processing unit based on predetermined criteria. For example, the desired value for the angle of the trawl doors may be set at the angle which the doors have had during a certain period of time. Alternatively, the desired value may be calculated by employing other parameters, such as filling (ratio) sensors, for example by the angle the trawl doors have, and the distance between the doors when fish fills the trawl, being set at a desired value for the angle of the trawl doors and door distance respectively.

The calculations of the deviation may also comprise a filtering of measured data from the sensors. Such a filtering will remove "natural" variations, for example by filtering out variations in a measurement parameter which is below a certain threshold value.

In an embodiment the calculated deviation is displayed for each of the sensor measurements along a timeline on the screen, for example as points or as one or more lines. The deviations may be displayed along the same timeline, either overlapping or parallel.

The interplay between towing speed (flow of water into the trawl), roll angle and warp length of the trawl doors (length of the wires towing the trawl) permits the parameters of the trawl to be finely adjusted, thereby providing optimal trawl geometry, i.e. the trawl's opening, symmetry etc are optimal.

In an embodiment the method according to the invention comprises:
- measuring two or more trawl parameters during fishing,
- calculating the trawl parameters' deviation from the desired value, and
- displaying the deviation on a screen.

In an embodiment the system according to the invention comprises a control device connected to one or more of;
- a trawler's control system,
- a winch device for paying out or taking in wire connected with the trawl, and
- a control unit for the trawl doors.

A trawler's control system comprises control of propeller and rudder for the vessel towing the trawl during trawling.

The winch device may be manually operated or motorized and the control device will be adapted for controlling the winding in or out of wire on the winch in order to determine the trawl's distance from the vessel.

In this connection the processor unit may be adapted for transmitting control signals to the control device based on sensor data. For example, if the calculated deviation between desired and measured parameter is greater than a threshold value, the processor unit can calculate how much the parameter has to be altered in order to obtain the desired value.

In the same way the trawl doors, or particularly their angles, can be controlled by means of the control device.

The control of the vessel, winch and trawl doors may also be undertaken manually by an operator based on the display of sensor data or the processed sensor data, for example the calculated deviation.

It will also be easy for the operator to see how the various parameters influence one another, since the change of a parameter will cause the display of other deviations to also change. This offers the operator the opportunity both to learn how the trawl behaves in different situations and to record how the choices have consequences.

The invention will now be described in more detail by means of examples and with reference to the accompanying figures.
Figure 1 illustrates an example of a display from the prior art.
Figure 2 illustrates an example of a display for a trawl monitoring system according to the invention.
Figure 3 illustrates a second example of a display for a trawl monitoring system according to the invention.

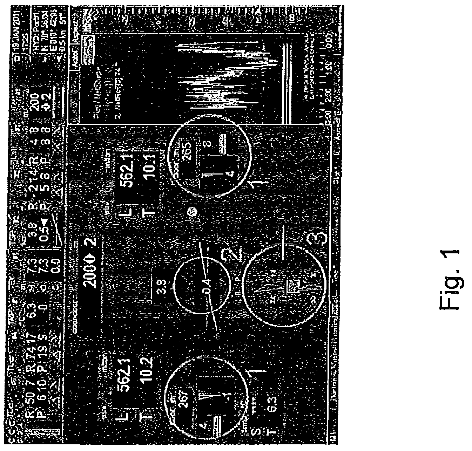

Figure 1 illustrates a picture of the geometry as a part of a display from a Scanmar trawl monitoring system/fishing control system. In this picture geometrical parameters can be seen and the doors can be observed to be unstable 1, and that this is due to a side current from starboard 2. In the same picture it can also be seen that the two quantity sensors 3 which are in use are activated, and that the bag is twisted towards starboard.

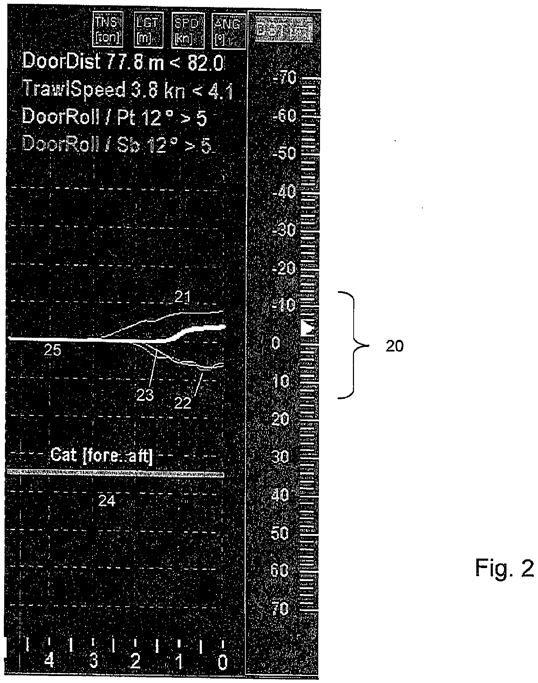

Figure 2 illustrates an example of a display where the system and the method according to the invention have been employed. In the upper part of the figure 20 several parameters are illustrated overlapping along a time axis. The thick line 25 is a representation of the distance between the trawl doors and shows calculated deviation between measurements from door distance sensors and desired value for door distance along a timeline. When measured door distance is equal to or almost equal to desired door distance, a straight line is shown, but when the door distance changes, for example on account of changes in the vessel's speed relative to the water speed, the illustrated line will deviate from a straight line, consequently becoming curved. The rest of the lines in the figure show a deviation from the desired value for trawl speed 21 and door angles 22, 23. In this figure one can see at a glance how the different parameters are linked, as a change in one of the parameters will also be reflected in the others. For example, changes in door distance, door angle and trawl speed are linked. If the trawl speed is altered, the door angles and the door distance will also be changed. The fisherman can thus easily see the effect of changing the speed. Similar correlations are the case with other parameters. This provides an operator with a good basis for making the correct decisions quickly and easily as to which actions should be undertaken.

The figure also shows a display of measured data for a quantity sensor 24.

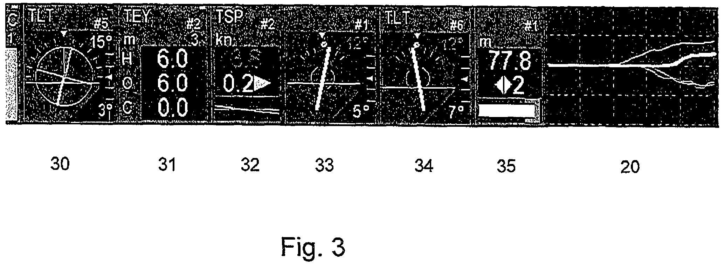

Figure 3 illustrates an example of a screen on which the display of the deviation for measurements is arranged together with the display of the actual measured data for several trawl parameters. In this display measured data are shown for the following sensors: filling ratio 30, trawl eye 31, trawl speed 32, door angles 33, 34, door distance 35. Beside the displays of these sensor data, the same picture 20 is shown as described in connection with figure 2. In this way the operator on the vessel receives a great deal of information in the same display, thereby facilitating the work of making adjustments during the fishing operation.

## Claims

1. A system for control of trawling comprising two or more sensors for measuring trawl parameters during fishing, a processor unit for processing sensor data, a screen for displacing sensor data and/or processed sensor data, characaterised in that the processor unit is adapted for calculating the deviation between desired value for the trawl parameters and the value measured by the sensor for the trawl parameters.

2. A system according to claim 1, where the sensors are one or more of quantity sensors, angle sensors, trawl eyes, trawl speed sensors, door distance sensors or a combination thereof.

3. A system according to one of the claims 1-2, comprising a control device connected with one or more of;
- a trawler's control system,
- a winch device for paying out or taking in wire connected with the trawl, and
- a control unit for the trawl doors.

4. A system according to claim 3, where the processor unit is adapted for transmitting control signals to the control device based on sensor data.

5. A method for control of trawling, comprising:
- measuring two or more trawl parameters during fishing,
- calculating the trawl parameters' deviation from desired value,
- displaying the deviation on a screen.

6. A method according to claim 5, where the measurement of the trawl parameters is conducted continuously.

7. A method according to claim 5, where the measurement of the trawl parameters is conducted at predetermined intervals.

8. A method according to claims 5-7, where the calculated deviation is displayed along a timeline on the screen.

9. A method according to claims 5-8, where the measurement of the trawl parameters is undertaken by one or more of quantity sensors, angle sensors, trawl eyes, trawl speed sensors, door distance sensors or a combination thereof.

10. A method according to claims 5-9, comprising control of propeller, course, door angles and/or winch based on the calculated deviations.

## Patentansprüche

1. System zum Steuern der Schleppnetzfischerei, umfassend zwei oder mehrere Sensoren zum Messen von Schleppnetzparametern während des Fischens, eine Prozessoreinheit zum Verarbeiten von Sensordaten, einen Bildschirm zum Anzeigen von Sensordaten und/oder verarbeiteten Sensordaten, **dadurch gekennzeichnet, dass** die Prozessoreinheit dazu ausgebildet ist, die Abweichung zwischen einem gewünschten Wert für die Schleppnetzparameter und dem Wert, welcher durch den Sensor für die Schleppnetzparameter gemessen ist, zu berechnen.

2. System nach Anspruch 1, bei welchem die Sensoren Anzahlsensoren, Winkelsensoren, Schleppnetzaugen, Schleppnetz-Geschwindigkeitssensoren und/oder Scherbrettdistanzsensoren oder eine Kombination hiervon sind.

3. System nach Anspruch 1 oder 2, umfassend eine Steuervorrichtung, welche verbunden ist mit:
einem Fischerboot-Steuersystem, und/oder
einer Winschvorrichtung zum Abrollen oder Einrollen von einer Kurrleine, welche mit dem Schleppnetz verbunden ist, und/oder
einer Steuereinheit für die Scherbretter.

4. System nach Anspruch 3, bei welchem die Prozessoreinheit dazu ausgebildet ist, Steuersignale an die Steuervorrichtung basierend auf Sensordaten zu übertragen.

5. Verfahren zum Steuern der Schleppnetzfischerei, umfassend:
Messen von zwei oder mehreren Schleppnetzparametern während des Fischens,
Berechnen der Abweichung der Schleppnetzparameter gegenüber einem gewünschten Wert,
Anzeigen der Abweichung auf einem Bildschirm.

6. Verfahren nach Anspruch 5, bei welchem die Messung der Schleppnetzparameter kontinuierlich durchgeführt wird.

7. Verfahren nach Anspruch 5, bei welchem die Messung der Schleppnetzparameter bei vorbestimmten Intervallen durchgeführt wird.

8. Verfahren nach einem der Ansprüche 5 bis 7, bei welchem die berechnete Abweichung entlang einer Zeitlinie auf dem Bildschirm angezeigt wird.

9. Verfahren nach einem der Ansprüche 5 bis 8, bei welchem die Messung der Schleppnetzparameter durch Anzahlsensoren, Winkelsensoren, Schleppnetzaugen, Schleppnetz-Geschwindigkeitssensoren und/oder Scherbrettdistanzsensoren oder eine Kombination hiervon durchgeführt wird.

10. Verfahren nach einem der Ansprüche 5 bis 9, umfassend das Steuern einer Schiffsschraube, eines Kurses, eines Scherbrettwinkels und/oder einer Winsch basierend auf den berechneten Abweichungen.

## Revendications

1. Système de commande de chalutage comprenant deux capteurs ou plus pour mesurer des paramètres de chalut pendant la pêche, une unité de traitement pour traiter les données de capteurs, un écran pour afficher les données de capteurs et/ou les données de capteurs traitées, **caractérisé en ce que** l'unité de traitement est conçue pour calculer l'écart entre une valeur souhaitée pour les paramètres de chalut et la valeur mesurée par le capteur pour les paramètres de chalut.

2. Système selon la revendication 1, dans lequel les capteurs consistent en un ou plusieurs capteurs de quantité, capteurs d'angle, capteurs d'oeillets de chalut, capteurs de vitesse de chalut, capteurs de distance de porte ou une combinaison de ceux-ci.

3. Système selon l'une des revendications 1 et 2, comprenant un dispositif de commande connecté à un ou plusieurs :
- d'un système de commande du chalutier,
- d'un dispositif de treuil pour dérouler ou enrouler le câble relié au chalut, et
- d'une unité de commande pour les portes de chalut.

4. Système selon la revendication 3, dans lequel l'unité de traitement est conçue pour transmettre des signaux de commande au dispositif de commande sur la base des données de capteurs.

5. Procédé de commande de chalutage, comprenant :
- la mesure de deux paramètres de chalut ou plus pendant la pêche,
- le calcul de l'écart des paramètres de chalut par rapport à une valeur souhaitée,
- l'affichage de l'écart sur un écran.

6. Procédé selon la revendication 5, dans lequel la mesure des paramètres de chalut est effectuée en continu.

7. Procédé selon la revendication 5, dans lequel la mesure des paramètres de chalut est effectuée à des intervalles prédéterminés.

8. Procédé selon les revendications 5 à 7, dans lequel l'écart calculé est affiché le long d'une ligne de temps sur l'écran.

9. Procédé selon les revendications 5 à 8, dans lequel la mesure des paramètres de chalut est effectuée par un ou plusieurs capteurs de quantité, capteurs d'angle, capteurs d'oeillets de chalut, capteurs de vitesse de chalut, capteurs de distance de porte ou une combinaison de ceux-ci.

10. Procédé selon les revendications 5 à 9, comprenant la commande des angles d'hélice, de trajectoire, de porte et/ou du treuil sur la base des écarts calculés.
